# EUROPEAN PATENT SPECIFICATION

(11) **EP 0 583 740 B1**
(45) Date of publication and mention of the grant of the patent: **09.04.1997**
(21) Application number: 93112925.8
(22) Date of filing: 12.08.1993
(51) Int. Cl.: B65G 15/12, A23G 3/20

(54) **A conveyor line for moulds, for example, for lines for handling food products**
Förderlinie für Formen, zum Beispiel zur Handhabung von Nahrungsmitteln
Ligne de transport pour des moules, par exemple pour la manipulation de produits alimentaires

(30) Priority: 19.08.1992 CH 2582/92
(43) Date of publication of application: 23.02.1994
(73) Proprietor: SOREMARTEC S.A., 6700 Arlon-Schoppach (BE); Ferrero S.p.A., I-12051 Alba (Cuneo) (IT); Ferrero oHG mbH, D-60599 Frankfurt (DE)
(72) Inventor: Ferrero, Pietro, B-1640 Rhode St. Genèse (BE)
(74) Representative: Bosotti, Luciano

(56) References cited:
- EP-A- 0 083 324
- EP-A- 0 459 272
- US-A- 4 231 465
- US-A- 4 917 226

## Description

The present invention relates to conveyor lines for moulds and has been developed with particular attention to its possible use in the field of equipment for handling food products.

In this context, the products being processed are frequently located in moulds which have recesses for housing them. For example, European patent application EP-A-0 083 324 describes a mould which can be used to produce food products each constituted by two hemispherical wafer shells which are intended to be joined to each other so as to fit together frontally after a mass of creamy or pasty filling has been placed in the half shells. For this purpose, the two wafer half shells are inserted in respective (half) moulds in order to receive the corresponding portion of filling. The two moulds are then turned over onto one another in a generally hinged arrangement to bring the two filled half shells to the connection position, encouraging them to join together, also as a result of the connection between the respective portions of filling.

The same solution may, of course, also be used for different products. For example, the moulds may have cells which can create chocolate shells or eggs (hollow and/or filled) and other products.

Naturally, in order to obtain a wholly satisfactory result, it is necessary to arrange for the moulds with the products within them to advance in an orderly manner through the various stations of the production line (for example, for the wafer half shells to be inserted in the moulds, for the mass of filling to be poured in, for the moulds to be joined together, for the moulds to be opened, etc., possibly with intermediate cooling and curing stages) at a precisely predetermined and controlled rate and in conditions in which they are reliably aligned with the zones of operation of the various stations.

In conventional equipment, it is usual to ensure that these conditions are respected with the use of conveyor lines on which the moulds advance in engagement with positive entrainment members such as chains, grippers or entrainment teeth or dogs, etc., which are intended coercively to locate each mould precisely in space and time within the conveyor line, particularly in correspondence with the processing stations.

However, this solution gives rise to considerable practical difficulties, particularly in the regions where it is necessary to slow down and, in particular, to stop the advance of the moulds (for example, in correspondence with the stations where the masses of filling are poured into the products or where the products are decorated). Clearly, with the use of direct and positive entrainment of the moulds, it is necessary to provide either for a momentary stoppage of the conveyor line (which therefore advances in steps) or for the momentary disengagement of the mould from the conveyor line.

The same requirements also arise, often in an even more critical manner when, instead of being stopped, the moulds are "followed" by the processing stations.

Neither of the solutions described above can be considered wholly satisfactory; the first since it usually involves the need to stop and/or slow down not only the mould which is being processed at the time in question but also other closely adjacent moulds in the flow; the second since it can create considerable practical complications within the equipment.

The object of the present invention is to provide a conveyor line for products housed in moulds which radically overcomes the problems set out above.

According to the present invention, this object is achieved by virtue of a conveyor line having the specific characteristics recited in Claim 1, some of which are known per se, e.g. from US-A-4 231 465. Specifically that prior art document discloses a self-timing automatic conveyor system including a low-friction conveyor belt as well as a holding mechanism actuatable to open and close for selectively controlling flow of goods along the conveyor belt. Advantageous developments of the invention form the subject matter of the subclaims which follow.

The invention will now be described, purely by way of non-limiting example, with reference to the appended drawings, in which:
Figure 1 is a schematic, perspective view of a conveyor line formed according to the invention, and
Figure 2 shows, in greater detail the structure of one of the moulds to be used in the conveyor line according to the invention, from a viewpoint corresponding approximately to that indicated by the arrow II in Figure 1.

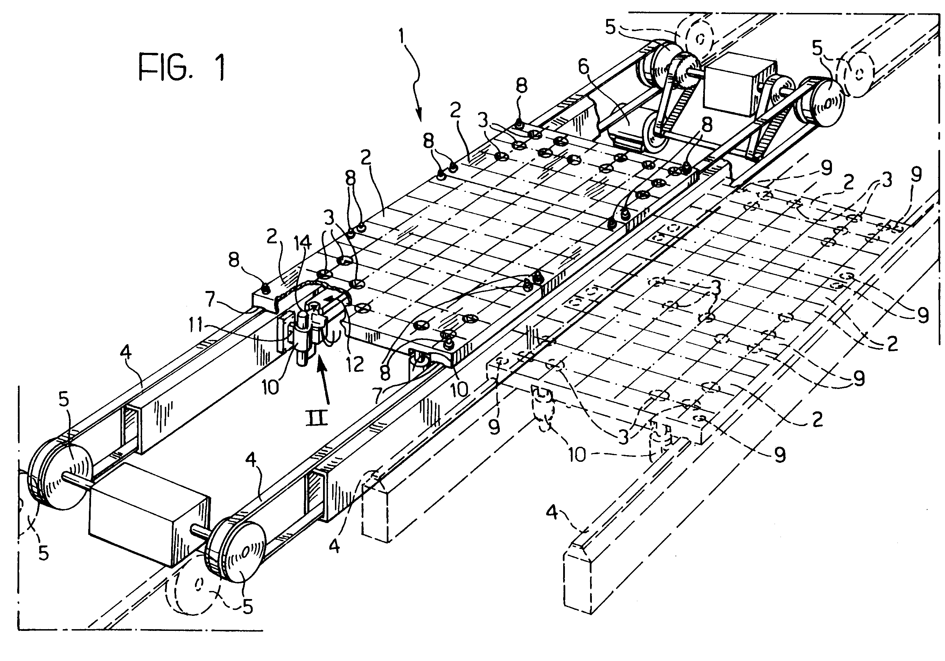

In Figure 1, a conveyor line for moulds is generally indicated 1.

By way of example, these may be moulds 2 having holes or cells 3 which can house hemispherical wafer shells which, in turn, are intended to house masses of pasty or creamy filling so as to give rise to a generally spherical food product as a result of the frontal connection of the two filled half shells. Moulds of this type are described, for example, in European patent application EP-A-0 083 324 already mentioned above.

As already stated, this indication of a possible use should in no way be interpreted in a limiting sense: the moulds 2 may in fact be configured with a view to use in conjunction with different products such as chocolate shells or eggs (hollow and/or filled).

It should also be noted that the conveyor line 1 shown in Figure 1 is generally a double line, in the sense that it actually comprises two paired conveyor lines which travel parallel and closely adjacent to each other. For simplicity of illustration, the profile of one of the lines is shown in broken outline and the following description will be given with specific reference solely to the line shown in continuous outline: it is nevertheless intended that what is stated for one of the lines also applies almost identically to the line paired therewith.

The presence of two lines side by side, on which the moulds (or, more correctly, the half-moulds) 2 advance in two paired and coordinated rows is advantageous in any situation in which it is necessary to join respective male and female (half) moulds together in order to produce a product.

One of the paired conveyor lines thus carries the male half-moulds and the other carries the female half-moulds. Turning devices (not shown) are disposed along the paired lines for turning the male half-moulds over onto respective female half-moulds and then reopening the moulds by turning the male half-moulds upwardly again. This is all in accordance with criteria which do not need to be described in detail herein, since they are not relevant for the purposes of an understanding of the invention.

The main characteristic of the solution according to the invention is that the moulds 2 do not move along the respective conveyor line as a result of a positive entrainment effect exerted by hooking or engagement members such as grippers, teeth, dogs, etc., but simply because they are supported on movable entrainment formations which, in the embodiment illustrated, are constituted by the upper passes of two endless belts 4 disposed side by side and extending around respective end pulleys 5 with horizontal axes. In particular, at least in correspondence with one end of the loops formed by the belts 4, the pulleys 5 are rotated by a drive device constituted, for example, by a direct-current electric motor 6. Naturally, Figure 1 shows only one of the many portions in cascade which can make up a more complex conveyor line: the profiles of two adjacent portions disposed upstream and downstream respectively are shown schematically in broken outline in the drawings.

It will be noted, in particular, that the belts 4 are preferably belts with rectangular cross-sections. Although this selection is preferred, it should not be considered limiting. In fact, the belts 4 could even be replaced by other equivalent formations for this purpose, for example belts with circular cross-sections (so-called policords). In general, however, the selection of belts with flattened, rectangular cross-sections is considered preferable in order to ensure that the moulds 2 are supported correctly on the belts 4.

In the solution according to the invention, in fact, the moulds 2 are unrestrained, so to speak, in the sense that they travel simply supported on the upper passes of the belts 4 and are therefore advanced by the belts 4 as a result of the frictional relationship in which the lower faces of the moulds 2 are supported on the upper passes of the belts 4.

For this purpose, the undersides of the moulds 2 have grooves 7 the shapes of which are complementary to the cross-sections of the belts 4 and which extend in the direction in which the moulds 2 are to be advanced. By way of example, the belts 4 may have rectangular cross-sections approximately 15-25 mm x 4-5 mm. The grooves 5 in the undersides of the moulds 2 have corresponding cross-sections (naturally leaving a small clearance).

The fact that the grooves 7 extend in the direction of advance of the moulds 2 ensures that, once the moulds are fitted securely on the belts 4 with the latter extending within their respective grooves 7, each mould 2 is positioned precisely and is safe from any risk of misalignment relative to the direction of advance.

At the same time, the existence of a certain clearance between the belts 4 and the grooves 7 prevents sticking: from this point of view, the use of a rectangular cross-section is preferable to a circular cross-section, since circular belts show a greater tendency to stick against the walls of the grooves 7.

The moulds 2 may advantageously be made of moulded plastics material. Their production by moulding facilitates the provision of the cells 3 and, possibly, of formations 8 for facilitating the exact superposing and joining together of complementary (half) moulds. More precisely these are formations 8 which project upwardly from the upper or front faces of the male moulds (which are transported on the conveyor structure shown in continuous outline) and can engage corresponding holes 9 in the female moulds (which are transported on the line shown in broken outline). This ensures that the moulds are superposed in precise alignment in the condition in which they are joined together frontally when the male moulds are turned over onto the female moulds.

Moreover, the presence of the projecting formations 8 allows for the male moulds to be stacked, possibly with products housed within them, for example, with a view to locating them temporarily on cooling, conditioning or curing lines, or simply in order to store the moulds.

In the first place, the fact that the moulds 2 are simply supported on the upper passes of the belts 4 offers the advantage that the moulds 2 can be loaded onto and unloaded from the conveyor line simply by a lowering or raising movement relative to the upper passes of the belts 4 and hence without the need for complex operations for engaging or disengaging entrainment formations.

Moreover, at least within certain limits, the initial positions in which the moulds 2 are housed on the upper passes of the belts 4 is not particularly critical: the moulds 2 can then be positioned precisely longitudinally of the belts 4 by being made to slide along them.

The fact that the moulds 2 can slide relative to the upper passes of the belts 4 is thus used, in the solution according to the invention, in order to stop the moulds 2 on the conveyor line.

For this purpose, there are one or more stop units 10 along the line, preferably beneath the moulds 2 and in the space between the belts 4. Two stop units are usually disposed adjacent the belts 4 so that they can operate symmetrically on the opposite ends (transverse the direction of advance) of the moulds 2.

The units 10 are preferably constituted by jack-type devices having pins or fingers 11 which are movable selectively (under the action of a fluid or electromagnetic operating member which in turn is controlled by the processing device - for example, a PLC which controls the operation of the conveyor line) between rest positions, in which they are retracted downwardly (shown in broken outline in the drawings), and raised, operative positions (shown in continuous outline).

In the downwardly-retracted position, the pins or fingers 11 do not interfere with the advance of the moulds 2 along the line 1.

In the raised position, however, the pins 11 (which act as engagement elements) can engage corresponding formations 12 on the lower portions of the moulds 2.

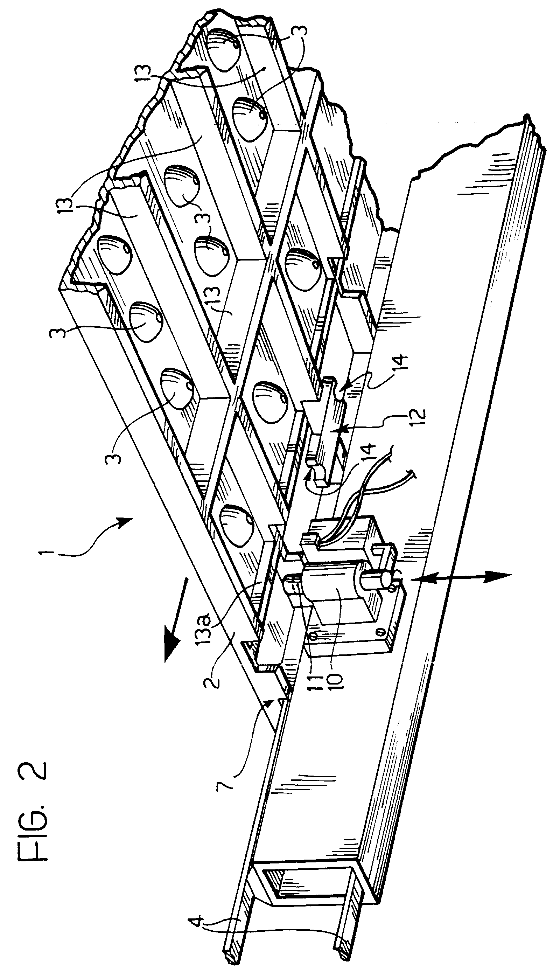

As can better be seen in the view from below of Figure 2, the moulds 2 (which, as already stated, are preferably formed by the moulding of plastics material) have a generally ribbed structure with stiffening ribs 13 which extend both in the direction in which the moulds are intended to advance and in a perpendicular direction.

In particular, two of the ribs which extend in the direction of advance are arranged in positions such that, when the mould 2 is mounted on the belts 4 they are aligned with the stop units 10 and, in particular, with the paths of movement (vertical) of the pins 11. The ribs in question (only one of which is visible in Figure 2 where it is indicated 13a) are generally recessed, in the sense that, measured perpendicular to the general plane of the mould, they are shorter than the other corresponding ribs 13a. The formations 12 occupy positions approximately in the middle of the ribs in question. In particular, each of the formations 12 is generally H-shaped with two approximately semi-circular or U-shaped end recesses 14 which are intended (see Figure 1 in particular) to constitute seats for housing and acting against the pins 11 in their raised positions.

Consequently, when a mould 2 is to be stopped in a certain position on the conveyor line, it suffices to provide one or preferably - for the reasons of operational equilibrium and symmetry seen above - two stop units 10, 11 in that position, the pins 11 being moved from their lowered, rest positions, towards their raised positions when the mould 2 approaches this position. When the mould 2 passes over the stop units 10, 11, the fingers 11 are inserted in the holes 14 in the formations 12, preventing the mould 2 from advancing further and the mould starts to slide on the belts 4 which are kept continually in motion.

These conditions can be maintained without problems throughout the period of time necessary for the envisaged operation on the mould 2 (including any raising and turning-over of the mould), or the following thereof by a handling station.

Once the envisaged operation is completed, the stop units 10, 11 can be returned to the rest positions, by the lowering of the pins 11. The mould 2 is thus released from the restraining effect exerted as a result of the action of the fingers 11 against the formations 12 and can continue to advance on the upper passes of the belts 4.

This operation can be repeated selectively for each mould 2 which advances on the conveyor line without the need simultaneously to stop the movement of the adjacent moulds in the flow. Moreover, the stopping operation is extremely easy to carry out and does not require the provision of particularly complex devices. Furthermore, the stopping - at least momentarily - of the movement of the moulds can also be used to accumulate moulds along the line of advance in order to release them in a selective and metered manner so as to create a regular flow of precisely equally-spaced moulds advancing in a precise space and time relationship with subsequent work stations downstream of the accumulation position.

Naturally, the generally H-like shape of the formations 12 with two opposed cavities 14 is intended to enable the moulds 2 to be disposed on the belts 4 in two opposite orientations.

The formations 12 can thus be formed either on the measured centreline (relative to the lengths of the moulds in the direction of advance thereof) or offset from the centreline.

In the first case, if the units 10, 11 are mounted in fixed positions, the position in which the moulds 2 stop in correspondence with the units will be identical regardless of the orientation of the mould 2 on the belts 4. In the second case, however, it will be possible to achieve two different stopping positions of the mould 2 according to the orientation in which it is mounted on the belts.

Naturally, the principle of the invention remaining the same, the details of construction and forms of embodiment may be varied widely with respect to those described and illustrated, without thereby departing from the scope of the appended claims. For example, although the use of two, paired, belt formations 4 is preferable, it is not essential. It would be possible, for example, either to use a larger number of belts (for example, three or more) whilst retaining the ability to stop the movement of the moulds by causing them to slide on the belts, or to use a single belt entrainment formation, the movement of the moulds being regulated, however, by means of passive sliding formations (e.g. guides or rollers) which do not actively entrain the moulds 2. In any case, the ability to stop the movement of the moulds by causing them to slide on the entrainment formation or formations is retained.

## Claims

1. A conveyor line for moulds (2) comprising:
- at least one entrainment formation (4) which is movable in a transportation direction and can receive the moulds (2) which are supported thereon so that the moulds (2) are entrained by the at least one entrainment formation (4) in the direction of transportation,
- stop means (10, 11) which are located in generally fixed positions and can interfere with the movement of the moulds (2) so as to stop them whilst each stopped mould (2) performs a sliding movement relative to the entrainment formation (4) which is kept in motion, and wherein the bottom of each mould (2) has at least one groove (7) for cooperating with and housing the entrainment formation (4).

2. A conveyor line according to Claim 1, characterized in that the at least one entrainment formation (4) is constituted by an endless motor-driven element with an upper pass on which the moulds (2) are supported.

3. A conveyor line according to Claim 1 or Claim 2, characterized in that the at least one entrainment formation (4) is a belt.

4. A conveyor line according to Claim 3, characterized in that the belt (4) has a rectangular profile.

5. A conveyor line according to any one of Claims 1 to 4, characterized in that there are at least two paired entrainment formations (4).

6. A conveyor line according to Claim 5, characterized in that the stop means (10, 11) act in positions generally between the at least two entrainment formations (4).

7. A conveyor line according to any one of Claims 1 to 6, characterized in that it comprises at least two units (10, 11) for stopping the movement of the moulds (2), the units operating in generally symmetrical positions relative the moulds (2).

8. A conveyor line according to Claim 1 and Claim 4, characterized in that the at least one groove (7) has a rectangular cross-section.

9. A conveyor line according to Claim 7, characterized in that the at least one groove (7) has dimensions such as to provide a certain clearance with respect to the at least one entrainment formation (4).

10. A conveyor line according to any one of Claims 1 to 9, characterized in that the stop means (10, 11) act on the undersides of the moulds (2).

11. A conveyor line according to any one of Claims 1 to 10, characterized in that the stop means (10, 11) comprise at least one engagement element (11) which is movable selectively between a rest position in which the engagement element (11) does not interfere with the advance of the moulds (2) and an active position, in which the engagement element (11) extends towards the moulds (2) and stops their movement.

12. A conveyor line according to Claim 10, characterized in that the bottom of each mould (2) has at least one engagement formation (12) cooperating with the stop means (10, 11), in engagement therewith.

13. A conveyor line according to Claim 12, characterized in that the at least one engagement formation (12) has at least one C- or U-shaped recess (14) housing the stop means (11).

14. A conveyor line according to Claim 12, characterized in that the at least one engagement formation (12) is of a generally symmetrical shape and can therefore cooperate with the stop means (10, 11) regardless of the orientation of the respective mould (2) relative to the at least one entrainment formation (4).

15. A conveyor line according to Claim 14, characterized in that the at least one engagement formation (12) is generally H-shaped.

16. A conveyor line according to Claim 14, characterized in that the at least one engagement formation (12) is located symmetrically relative to the respective mould (2) so that it cooperates with the stop means (10, 11) in an identical manner regardless of the direction of advance of the respective mould (2) on the at least one entrainment formation (4).

17. A conveyor line according to Claim 14, characterized in that the at least one engagement formation (12) is located asymmetrically relative to the respective mould (2) so that it cooperates with the stop means (10, 11) in a differentiated manner according to the orientation of the respective mould (2) relative to the at least one entrainment formation (4).

18. A line according to any one of Claims 1 to 17, characterized in that the moulds (2) have complementary elements (8, 9) on their upper faces for enabling the moulds to be precisely superposed and joined together in a generally male-and-female arrangement.

19. A conveyor line according to Claim 18, characterized in that at least some of the complementary elements (8) are in the form of appendages projecting from the upper faces of the respective moulds (2) so that the respective moulds (2) can be stacked with the use of the projecting formations (8).

20. A conveyor line according to any one of Claims 1 to 19, characterized in that it is associated in an operatively paired relationship with a substantially identical line in order to achieve two parallel and synchronized flows of moulds (2).

## Patentansprüche

1. Förderlinie für Formen (2) umfassend:
- zumindest eine Mitnahmevorrichtung (4), die in einer Transportrichtung bewegbar ist und die hierauf getragenen Formen (2) aufnehmen kann, so daß die Formen (2) durch die zumindest eine Mitnahmovorrichtung (4) in Transportrichtung mitgenommen werden,
- Stoppmittel (10, 11), die im wesentlichen in festen Positionen plaziert sind und mit der Bewegung der Formen (2) interferieren können, um diese zu stoppen, während jede gestoppte Form (2) relativ zu der in Bewegung gehaltenen Mitnahmevorrichtung (4) eine Gleitbewegung ausführt, und wobei der Boden jeder Form (2)zumindest eine Nut (7) zum Zusammenwirken mit und zum Aufnehmen der Mitnahmevorrichtung (4) aufweist.

2. Förderlinie nach Anspruch 1,
dadurch **gekennzeichnet,** daß
die zumindest eine Mitnahmevorrichtung (4) durch ein motorgetriebenes Endloselement mit einer oberen Bahn gebildet ist, auf der die Formen (2) getragen werden.

3. Förderlinie nach Anspruch 1 oder Anspruch 2,
dadurch **gekennzeichnet,** daß
die zumindest eine Mitnahmevorrichtung (4) ein Band ist.

4. Förderlinie nach Anspruch 3,
dadurch **gekennzeichnet,** daß
das Band (4) ein rechteckförmiges Profil hat.

5. Förderlinie nach einem der Ansprüche 1 bis 4,
dadurch **gekennzeichnet,** daß zumindest zwei nebeneinander angeordnete Mitnahmevorrichtungen (4) vorhanden sind.

6. Förderlinie nach Anspruch 5,
dadurch **gekennzeichnet,** daß
die Stoppmittel (10, 11) in Positionen wirken, die im allgemeinen zwischen den zumindest zwei Mitnahmevorrichtungen (4) liegen.

7. Förderlinie nach einem der Ansprüche 1 bis 6,
dadurch **gekennzeichnet,** daß
sie zumindest zwei Einrichtungen (10, 11) zum Stoppen der Bewegung der Formen (2) umfaßt, wobei die Einrichtungen in im wesentlichen symmetrischen Positionen relativ zu den Formen (2) wirken.

8. Förderlinie nach Anspruch 1 und Anspruch 4,
dadurch **gekennzeichnet,** daß
die zumindest eine Nut (7) einen rechteckförmigen Querschnitt hat.

9. Förderlinie nach Anspruch 7,
dadurch **gekennzeichnet,** daß
die zumindest eine Nut (7) Anmessungen aufweist, um so einen bestimmten Zwischenraum bezüglich der zumindest einen Mitnahmevorrichtung (4) zu schaffen.

10. Förderlinie nach einem der Ansprüche 1 bis 9,
dadurch **gekennzeichnet,** daß
die Stoppmittel (10, 11) auf die Unterseiten der Formen (2) einwirken.

11. Förderlinie nach einem der Ansprüche 1 bis 10,
dadurch **gekennzeichnet,** daß
die Stoppmittel (10, 11) zumindest ein Eingriffselement (11) umfassen, das wahlweise zwischen einer Ruheposition, in der das Eingriffselement (11) nicht mit der Vorwärtsbewegung der Formen (2) interferiert, und einer Aktivposition, in der das Eingriffselement (11) sich zu den Formen (2) erstreckt und deren Bewegung stoppt, bewegbar ist.

12. Förderlinie nach Anspruch 10,
dadurch **gekennzeichnet,** daß
der Boden einer jeden Form (2) zumindest eine Eingriffsausformung (12) aufweist, die mit den Stoppmitteln (10, 11) in Eingriff gelangend zusammenwirkt.

13. Förderlinie nach Anspruch 12,
dadurch **gekennzeichnet,** daß
zumindest eine Eingriffsausformung (12) zumindest einen C- oder U-förmigen Einschnitt (14) aufweist, der das Stoppmittel (11) aufnimmt.

14. Förderlinie nach Anspruch 12,
dadurch **gekennzeichnet,** daß
die zumindest eine Eingriffsausformung (12) eine im wesentlichen symmetrische Gestalt hat und aufgrund dessen unabhängig von der Ausrichtung der jeweiligen Form (2) relativ zu der zumindest einen Mitnahmevorrichtung (4) mit den Stoppmitteln (10, 11) zusammenwirken kann.

15. Förderlinie nach Anspruch 14,
dadurch **gekennzeichnet,** daß
die zumindest eine Eingriffsausformung (12) im wesentlichen H-förmig ist.

16. Förderlinie nach Anspruch 14,
dadurch **gekennzeichnet,** daß
die zumindest eine Eingriffsausformung (12) relativ zur jeweiligen Form (2) symmetrisch plaziert ist, so daß sie unabhängig von der Vorwärtsbewegungsrichtung der jeweiligen Form (2) auf der zumindest einen Mitnahmevorrichtung (4) mit den Stoppmitteln (10, 11) in einer identischen Art und Weise zusammenwirkt.

17. Förderlinie nach Anspruch 14,
dadurch **gekennzeichnet,** daß
die zumindest eine Eingriffsausformung (12) derart relativ zur jeweiligen Form (2) symmetrisch plaziert ist, so daß sie in einer differenzierten Weise gemäß der Ausrichtung der jeweiligen Form (2) relativ zu der zumindest einen Mitnahmevorrichtung (4) mit den Stoppmitteln (10, 11) zusammenwirkt.

18. Förderlinie nach einem der Ansprüche 1 bis 17,
dadurch **gekennzeichnet,** daß
die Formen (2) komplementäre Elemente (8, 9) an ihren oberen Seiten aufweist, damit es den Formen ermöglicht ist, in einer allgemeinen Zusammenfügeanordnung präzise übereinandergelegt und miteinander verbunden zu werden.

19. Förderlinie nach Anspruch 18,
dadurch **gekennzeichnet,** daß
zumindest einige der komplementären Elemente (8) die Form von Ansätzen haben, die von den oberen Seiten der jeweiligen Formen (2) vorkragen, so daß die jeweiligen Formen (2) unter Verwendung der vorkragenden Formationen (8) gestapelt werden können.

20. Förderlinie nach einem der Ansprüche 1 bis 19,
dadurch **gekennzeichnet,** daß
sie in einer operativ nebeneinander geordneten Weise einer im wesentlichen identischen Förderlinie beigeordnet ist, um zwei parallele und synchronisierte Ströme von Formen (2) zu erzielen.

## Revendications

1. Transporteur pour moules (2) comprenant :
- au moins un dispositif d'entraînement (4) qui est mobile dans une direction de transport et peut recevoir les moules (2) qui sont supportés sur lui de manière que les moules (2) soient entraînés par ledit au moins un dispositif d'entraînement (4) dans la direction de transport,
- des unités d'arrêt (10, 11) qui sont situées dans des positions généralement fixes et peuvent entraver le déplacement des moules (2) afin de les arrêter tandis que chaque moule (2) arrêté a un mouvement de patinage sur le dispositif d'entraînement (4) qui est toujours en mouvement, et dans lequel le dessous de chaque moule (2) comporte au moins une gorge (7) destinée à coopérer avec le dispositif d'entraînement (4) et à loger ledit dispositif.

2. Transporteur selon la revendication 1, caractérisé en ce que ledit au moins un dispositif d'entraînement (4) est constitué par un élément sans fin entraîné par moteur avec une piste supérieure sur laquelle les moules (2) sont supportés.

3. Transporteur selon la revendication 1 ou 2, caractérisé en ce que ledit au moins un dispositif d'entraînement (4) est une courroie.

4. Transporteur selon la revendication 3, caractérisé en ce que la courroie (4) a une section rectangulaire.

5. Transporteur selon l'une quelconque des revendications 1 à 4, caractérisé en ce que sont prévues au moins deux dispositifs d'entraînement (4) en une paire.

6. Transporteur selon la revendication 5, caractérisé en ce que les unités d'arrêt (10, 11) agissent en des positions généralement entre lesdits au moins deux dispositifs d'entraînement (4).

7. Transporteur selon l'une quelconque des revendications 1 à 6, caractérisé en ce qu'il comprend au moins deux unités d'arrêt (10, 11) pour arrêter le déplacement des moules (2), les unités agissant en des positions généralement symétriques par rapport aux moules (2).

8. Transporteur selon la revendication 1 et la revendication 4, caractérisé en ce que ladite au moins une gorge (7) a une section transversale rectangulaire.

9. Transporteur selon la revendication 7, caractérisé en ce que ladite au moins une gorge (7) a des dimensions laissant un certain jeu par rapport audit au moins un dispositif d'entraînement (4).

10. Transporteur selon l'une quelconque des revendications 1 à 9, caractérisé en ce que les unités d'arrêt (10, 11) agissent sur le dessous des moules (2).

11. Transporteur selon l'une quelconque des revendications 1 à 10, caractérisé en ce que les unités d'arrêt (10, 11) comprennent au moins un élément d'engagement (11) qui est mobile sélectivement entre une position de repos dans laquelle l'élément d'engagement (11) n'entrave pas l'avance des moules (2) et une position active dans laquelle l'élément d'engagement (11) s'étend vers les moules (2) et arrête leur déplacement.

12. Transporteur selon la revendication 10, caractérisé en ce que le dessous de chaque moule (2) comporte au moins une structure d'engagement (12) coopérant avec l'unité d'arrêt (10, 11), en engagement avec elle.

13. Transporteur selon la revendication 12, caractérisé en ce que ladite au moins une structure d'engagement (12) comporte au moins un évidement en C ou en U (14) logeant l'unité d'arrêt (11).

14. Transporteur selon la revendication 12, caractérisé en ce que ladite au moins une structure d'engagement (12) a une forme généralement symétrique et peut donc coopérer avec l'unité d'arrêt (10, 11) quelle que soit l'orientation du moule (2) respectif par rapport audit au moins un dispositif d'entraînement (4).

15. Transporteur selon la revendication 14, caractérisé en ce que ladite au moins une structure d'engagement (12) a la forme d'un H.

16. Transporteur selon la revendication 14, caractérisé en ce que ladite au moins une structure d'engagement (12) se trouve en une position symétrique par rapport au moule (2) respectif de manière à coopérer avec l'unité d'arrêt (10, 11) de manière identique quelle que soit la direction d'avance du moule (2) respectif sur ledit au moins un dispositif d'entraînement (4).

17. Transporteur selon la revendication 14, caractérisé en ce que ladite au moins une structure d'engagement (12) se trouve en une position asymétrique par rapport au morne (2) respectif de manière à coopérer avec l'unité d'arrêt (10, 11) de manière différenciée selon l'orientation du moule (2) respectif par rapport audit au moins un dispositif d'entraînement (4).

18. Transporteur selon l'une quelconque des revendications 1 à 17, caractérisé en ce que les moules (2) sont dotés d'éléments complémentaires (8, 9) sur leur face supérieure pour permettre aux mornes d'être superposés et reliés en un agencement généralement mâle et femelle de manière précise.

19. Transporteur selon la revendication 18, caractérisé en ce que au moins certains des éléments complémentaires (8) ont la forme d'appendices en projection depuis la face supérieure des moules (2) respectifs de manière que les moules (2) respectifs puissent être empilés au moyen des éléments en projection (8).

20. Transporteur selon l'une quelconque des revendications 1 à 19, caractérisé en ce qu'il est fonctionnellement associé en une paire à un transporteur sensiblement identique afin d'obtenir deux flux de moules (2) parallèles et synchronisés.
